# EUROPEAN PATENT APPLICATION

(11) **EP 3 438 894 A1**
(43) Date of publication of application: **06.02.2019**
(21) Application number: 17184422.8
(22) Date of filing: 02.08.2017
(51) Int. Cl.: G06Q 10/06, G06Q 50/02

(54) **A HAND HELD DEVICE FOR ECONOMIC AGRICULTURAL MANAGEMENT**

(71) Applicant: Bayer Business Services GmbH, 51061 Köln (DE)
(72) Inventor: Schäfer, Dirk, 50171 Kerpen (DE)
(74) Representative: BIP Patents

(57) **Abstract**

The present invention relates to a hand held device for economic agricultural management. It is described to for a user of the device to provide (110) agricultural information relating to a field, wherein the agricultural information comprises information on at least one crop. A transmitter of the device transmits (120) information comprising the agricultural information relating to the field. A receiver of the device receives (130) agricultural data that comprises economic information relating to the at least one crop. A processing unit of the device determines (140) economic agricultural management information on the basis of the agricultural data. An output unit of the device outputs (150) the economic agricultural management information to the user of the device.

## Description

### FIELD OF THE INVENTION

The present invention relates to a hand held device for economic agricultural management and a method for economic agricultural management using a hand held device, as well as to a computer program element and a computer readable medium.

### BACKGROUND OF THE INVENTION

The general background of this invention is agricultural management. Increasingly sophisticated agricultural management systems are being provided to large scale agricultural enterprises, who operate sophisticated, sometimes automated, machinery within an integrated agricultural management system. However, a significant proportion of the food the world requires is produced by smallholders, who may have only one very small field, or a number of small fields, and who operate no, or little, mechanized machinery and for whom such sophisticated agricultural management systems are not appropriate.

### SUMMARY OF THE INVENTION

It would be advantageous to provide agricultural land management tools to aid such smallholders. The object of the present invention is solved with the subject matter of the independent claims, wherein further embodiments are incorporated in the dependent claims. It should be noted that the following described aspects and examples of the invention apply also for the hand held device for economic agricultural management, the method for economic agricultural management using a hand held device, and for the computer program element and the computer readable medium.

According to a first aspect, there is provided a hand held device for economic agricultural management, comprising:
- an input unit;
- a processing unit;
- a transmitter;
- a receiver; and
- an output unit.

The input unit is configured to enable a user of the device to provide agricultural information relating to a field, wherein the agricultural information comprises information on at least one crop. The processing unit is configured to utilize the transmitter to transmit information comprising the agricultural information relating to the field. The processing unit is configured also to utilize the receiver to receive agricultural data that comprises economic information relating to the at least one crop. The processing unit is configured to determine economic agricultural management information on the basis of the agricultural data. The output unit is configured to output the economic agricultural management information to the user of the device.
In this way, a farmer who may not know when to sell a crop, or where to sell that crop, or when to harvest the crop in order to sell at the best time, or what price they could get for their crop and at the quantity that is expected to be produced from their field, can be provided with specific information relating to such economic issues for that crop that takes into account information relating to the field where the crop is being grown or where growing that crop is being contemplated.

In an example, the device comprises a GPS unit. The processing unit is configured to determine at least one geographical location of the field, the determination comprising utilisation of the GPS unit. The information transmitted by the transmitter can comprise the at least one geographical location of the field.

In this way, a farmer who may not necessarily know exactly where his farm or a field in that farm is located, and what the best crop to grow at that location in terms of profitability and where to then sell that product, at what price and when, is able to be provided with relevant economic agricultural advice that is tailored to his location. In other words, a device such as a smartphone can use its GPS unit to determine a location of the smartphone. From that location, economic agricultural advice and/or information can be provided to the farmer via the screen of the smartphone.

In an example, determination of the at least one geographical location of the field comprises at least one movement of the GPS unit. In this manner, a farmer can move a device in order to determine the location of his field. In an example, the at least one movement comprises the device being moved around at least one boundary of the field. In other words, the farmer can delineate a field through positioning the device at a boundary of the field. In an example, wherein the at least one movement comprises the device being moved around all of the boundaries of the field.

In this manner, a farmer can walk or otherwise move around the border of his field. Therefore, not only can economic agricultural advice/information be provided to the farmer that accounts for his location the advice/information can account for the size of the field. In other words, the farmer can be provided with advice on what crop to grow and where that crop can be best sold from the location of the field, enabling information relating to what crops grow well at that location to be correlated with information relating to where in the locality that crop can be sold. In addition, by knowing the size of the field the expected crop yield can be taken into account with respect to selling that crop. For example, a particular size of field, at a particular location could be suited to growing crops A, B, C and D.

However, crop A that is normally very profitable, but is not easily transportable and in the locality of the farmer's field only a market at a significant distance from the field buys the product. For crop B, the crop is normally valuable, but the specific conditions relating to the farmer's field means that the crop would not grow well. For crop C, the crop is again profitable, but the local markets would not be able to buy all of the farmer's crop, which must be harvested in a short time period. However, for crop D, there is a good market in the local area, and the farmer is necessary could harvest over several weeks in order to not swamp the local markets and drive the price down. Thus, this information can be provided to the farmer in order to help him choose what crop to grow.

In addition to advising on what crops to grow, the farmer can be provided with information relating to a crop that is being grown. This can relate to the cost of fertilizers, herbicides, insecticides, as well as expected prices for his crop in local markets that can take account both of temporal fluctuations in prices in those markets, the prices for different grades or qualities of the crop, the quality or expected quality of his crop. This enables the farmer to determine if it is worthwhile to use fertilizers, herbicides, insecticides, where and when to harvest and sell his product and where. For example, the farmers product could be ideal to harvest and sell tomorrow, but that crop price is relatively low at the local markets, and as such it would be better to wait a little time and sell the crop later even if there is a slight fall in its quality.

In an example, the device comprises a camera. The camera is configured to enable the user to acquire at least one image relating to the at least one crop. The information transmitted by the transmitter can comprise the at least one image relating to the at least one crop.
In other words, the economic information relating to the at least one crop that is downloaded to the device can take into account actual images relating to the crop being grown. In an example, the at least one image relating to the at least one crop comprises an image of the at least one crop.

Thus, advice (economic agricultural management information) provided to the farmer can take account of how a crop looks. For example, the farmer could acquire an image of a tomato or several of their tomatoes growing in a field. The images could be of tomatoes in prime condition, average tomatoes or tomatoes that are sub-standard. The farmer could then be provided with information relating to what price they could expect for their crop, and where and when it would be best to sell it.

These images could be of tomatoes in prime condition, and the farmer could be provided with information that no remedial action is required and that they should continue growing them in the same manner. Advice, based on such imagery, could however advise the farmer when it could be best to harvest the tomatoes. However, the images of the tomatoes could indicate that they should be watered, that they are suffering from a pest or disease, or are less developed than they should be for this field in this location and taking into account when they were planted or sown, and the advice to the farmer could be to water the crop and how much water per unit area to apply, to use a herbicide and/or pesticide and when and how to apply it, and/or to use a fertilizer and when and how to use it.

In an example, the economic information relating to the at least one crop comprises pricing information relating to the at least one crop. In an example, the input unit is configured to enable the user of the device to input an information request relating to the at least one crop. Determination of the economic agricultural management information can then comprise utilisation of the information request relating to the at least one crop.

In this way, the advice provided to the farmer can relate to a specific question or problem the farmer has. For example, the farmer could indicate when they would like to sell their crop, for example they may need income at a particular time point. Taking that information into account, the farmer can be advised as to what would be the best crop to sow in order to have a crop ready for harvesting, taking into account the predicted weather at that location and/or details relating for example to the soil condition at the field, and what crops are sold at local markets, and whether good prices are obtainable. If the farmer is already growing a particular crop, the advice being given to the farmer could again relate to where that crop could be sold, and what price could be expected to be received. The information being provided by the farmer could just relate to the specific crop they are growing, a particular market they wish to use, or a market that they do not wish to use. Thus, the farmer can be provided with advice that is tailored to their needs.

The information being provided by the farmer could relate to what the economic benefit would be relating to the use of a fertilizer, a herbicide or pesticide. For example, on the basis of information relating to when a crop was sown, information on where the field is located and possibly information relating to the quality of the soil, and information relating to how the crop is growing for example images of the crop in terms of the plants and/or individual fruit including a statistical number of such images, the processing unit can determine what the expected selling price would be in the future at a particular market at a particular harvest time taking into account what the expected quality of the crop, and crop yield, at that harvest time would be. Taking into account the field size and the crop, the cost of applying fertilizer, herbicide and insecticide (or any number of these including just one) take be determined by the processor, and the expected increase in quality and/or yield predicted, leading to a new selling price being able to be predicted that could be at the same time or at an earlier time than the previous expected harvest time, with that expected cost enabled to be adjusted by the cost of the fertilizer, herbicide, pesticide etc. In this way, the farmer is able to determine what the expected economic return will be with respect to what they do.

In other words, on the basis of the information relating to a field and information on a crop, such as the crop being a tomato, information relating to tomatoes that are relevant to that field, for example taking into account the location of the field, the soil type in the field, the general weather conditions etc, can be downloaded to the device. The processor of the device then utilises that information, to process that information to provide a specific answer to a question posed by the farmer.

The question posed by the farmer can be processed externally by the device, for example at an external server and the specific answer to the question be contained within the agricultural data downloaded to the device and the processor then just needs to select that answer and present it to the farmer.
In an example, the economic agricultural management information comprises one or more of: what crop to sow; when to sow the crop; when to harvest the crop; when to sell the crop; where to sell the crop; what price is expected for the crop; whether to harvest and sell in stages and where to then sell the harvested crops; what to do to improve the quality and/or yield of the crop and what effect this has on the expected financial return for the crop; and whether to use a fertilizer, a herbicide and/or an insecticide and what effect this has on the expected financial return for the crop.

According to a second aspect, there is provided a method for economic agricultural management using a hand held device, comprising:
a) providing by a user of the device agricultural information relating to a field, wherein the agricultural information comprises information on at least one crop;
c) transmitting, using a transmitter of the device, information comprising the agricultural information relating to the field;
d) receiving, using a receiver of the device, agricultural data that comprises economic information relating to the at least one crop;
e) determining, using a processing unit of the device; economic agricultural management information on the basis of the agricultural data; and
f) outputting, using an output unit of the device, the economic agricultural management information to the user of the device.
In an example, the device comprises a GPS unit, and wherein step a) comprises determining at least one geographical location of the field, the determination comprising utilisation of the GPS unit, and wherein the information transmitted by the transmitter can comprise the at least one geographical location of the field.

In an example, the device comprises a camera, and wherein step a) comprises the user acquiring at least one image relating to the at least one crop using the camera, and wherein in step c) the information transmitted by the transmitter can comprise the at least one image relating to the at least one crop.

In an example, the method comprises step b) inputting by the user, via an input unit of the device, an information request relating to the at least one crop, and wherein step e) comprises utilisation of the information request relating to the at least one crop.
According to another aspect, there is provided a computer program element for controlling an apparatus according to the apparatus of the first aspect, which when executed by a processor is configured to carry out the method of the second aspect. In an example, there is provided a computer readable medium having stored the program element.

Advantageously, the benefits provided by any of the above aspects equally apply to all of the other aspects and vice versa. The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a hand held device for economic agricultural management;
Fig. 2 shows a method for economic agricultural management using a hand held device;
Fig. 3 shows a schematic set up of an example of the hand held device for economic agricultural management being operated by a user;
Fig. 4 shows a schematic set up of examples of the hand held device for economic agricultural management being operated by a user;
Fig. 5 shows a schematic set up of examples of the hand held device economic agricultural management being operated by a user;
Fig. 6 shows a schematic set up of examples of the hand held device for economic agricultural management being operated by a user;
Fig. 7 shows a schematic set up of examples of the hand held device for economic agricultural management being operated by a user; and
Fig. 8 shows a detailed example of a workflow for the provision of agricultural management information to a farmer.

### DETAILED DESCRIPTION OF EMBODIMENTS

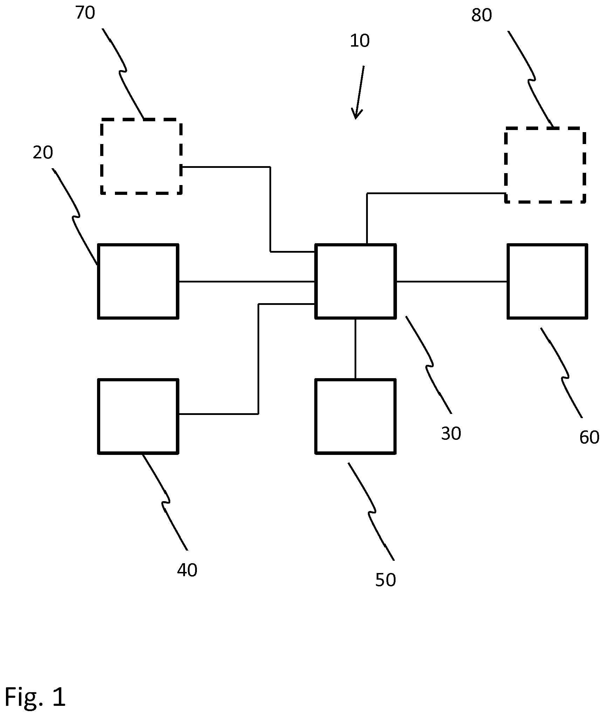

Fig. 1 shows an example of a hand held device 10 for economic agricultural management. The device 10 comprises an input unit 20, a processing unit 30, a transmitter 40, a receiver 50, and an output unit 60. The input unit 20 is configured to enable a user of the device to provide agricultural information relating to a field. The agricultural information comprises information on at least one crop. The processing unit 30 is configured to utilize the transmitter 40 to transmit information comprising the agricultural information relating to the field. The processing unit 30 is configured also to utilize the receiver 50 to receive agricultural data that comprises economic information relating to the at least one crop. The processing unit 30 is configured then to determine economic agricultural management information on the basis of the agricultural data. The output unit 60 is configured to output the economic agricultural management information to the user of the device, for example via a display of the device such as a display of a smartphone.

According to an example, the device comprises a GPS unit 70. The processing unit is configured to determine at least one geographical location of the field. The determination of the at least one geographical location comprises utilisation of the GPS unit. The information transmitted by the transmitter can then comprise the at least one geographical location of the field.

In an example, the device is configured to receive satellite imagery of the landscape. In this way, a GPS determined location can also be correlated to satellite imagery in order to determine the extent and boundaries of the farmer's field from field boundaries observed in the satellite imagery. In an example, the processing unit is configured to use imagery processing, such as edge detection filters to determine the field boundaries.

In an example, from a general GPS determined location, satellite imagery can be interrogated to provide the farmer with a number of bounded fields, any one or more of which could be their field or fields. These for example could be colour coded. These images of fields are then presented to the farmer, for example on the screen of a smart phone. The farmer, looking at these fields located as they are within satellite imagery, will immediately, from geographical contextual information, such as his field has a big tree in the corner or is next to a stream or is next to the triangular field, for example, be able to indicate which of these fields is his field. This can be done by touching the screen at the position of his or her field, where for example a smart phone has a touch sensitive screen. The potential fields can be presented in different colours to the farmer, making it easier to see the different fields in terms of structure and in the context of the surrounding geographical information.

Advice to the farmer can relate to information such as, what crop to grow, how to grow a crop, what herbicide, insecticide or fertilizer to use, when and for what reason, whether there is no need to use a herbicide, insecticide or fertilizer and why they are not needed, when to water the crop, when to sow to the crop and when to harvest the drop. The information provided to the farmer can relate to what disease is affecting the crop, what pest is affecting the crop and how to remedy the situation through for example application of a herbicide or insecticide and when and how it should be applied. The advice can relate to when to harvest the crop, how much of the harvest in a field to harvest at any time, where and when to sell the crop and what price is to be expected. The cost implications of all of these actions, with respect to profit and loss, when the farmer finally comes to sell the product can be presented to the farmer.

According to an example, determination of the at least one geographical location of the field comprises at least one movement of the GPS unit.

According to an example, the at least one movement comprises the device being moved around at least one boundary of the field.

According to an example, the at least one movement comprises the device being moved around all of the boundaries of the field.

According to an example, the device comprises a camera 80. The camera 80 is configured to enable the user to acquire at least one image relating to the at least one crop. The information transmitted by the transmitter can then comprise the at least one image relating to the at least one crop.

In an example, the at least one image relating to the at least one crop comprises an image of the ground or soil within which the at least one crop is growing and or is to be grown. In an example, the at least one image relating to the at least one crop comprises at least one part of the field. Determination of the at least one geographical location of the field in this example can then comprise utilisation of the at least one image.

In an example, the device is configured to receive satellite imagery of the landscape, and the processing unit is configured use the satellite imagery and the at least one image acquired by the camera of the device in determining the at least one geographical location. In other words, features that are in the acquired image can be compared and/or mapped onto satellite imagery in order to augment the GPS information to determine the at least one geographical location.
In an example, the at least one image comprises at least one image of at least one boundary of the field.
In an example, the at least one image comprises images of all of the boundaries of the field.
Thus, the exact size and location of the boundaries of a field can be determined on the basis of GPS derived information and image derived information. In this way, positional errors in GPS data can be mitigated through utilization of a whole series of images of a boundary of a field. These images can be compared with satellite imagery in order to determine the location of the field. Or, as the farmer walks around a field a whole series of images of the field boundary can be acquired. These can be rendered together to form a seemless synthetic boundary of the field, enabling the exact location of the field boundary and this the exact size of the field to be determined. As part of this image based process, the device such as a smart phone can utilize motion sensors, such as inertial navigation sensors, to determine the distance moved between the acquisition of each image. This information can be used to provide a real size to the dimensions of the synthetic boundary rendered from the images of the field boundary, enabling the exact geographical location of the boundary to be determined. This can augment the GPS derived location information.

According to an example, the at least one image relating to the at least one crop comprises an image of the at least one crop. In an example, the at least one image relating to the at least one crop comprises an image of a weed, and/or pest and/or disease of the at least one crop. According to an example, the economic information relating to the at least one crop comprises pricing information relating to the at least one crop.

In an example, the pricing information relates to historical pricing information. In an example, the pricing information relates to predicted pricing information. In an example, the pricing information is predicted making use of historical pricing information. In an example, the pricing information is predicted making use of weather forecast information. In an example, the pricing information is predicted making use of at least one image relating to the crop. In an example, the image relates to the plants that are growing thus an assessment can be made as to the health of the crop and the expected price that the crop could get when harvested. In an example, the image relates to the fruits that are growing thus an assessment can be made as to the expected price that could be achieved when harvested. In an example, the at least one image relating to the crop comprises satellite imagery of the area surrounding the field. In this way, image analysis can determine what type of crops are being grown in the locality. Thus, if the farmer is growing the same crop as other farmers then the price she may achieve may not be as good as the price she could get if the surrounding farms are growing different crops. Satellite imagery over a number of years can be interrogated to determine what crops were grown over previous years and this can be correlated with the price of different crops in the local markets over those same years, and this information can be used with satellite imagery of the fields in the area this year in order to better determine the expected price for the farmer's crop in the local markets when she comes to sell the crop, and can better determine which markets top sell the product. This information can also be used to advise the farmer what crop to grow, in that it could be a good decision to grow a crop that other farmers are not or appear not to be growing, because there could be a price premium for such a scarce resource when she comes to sell the crop in a local market.

In an example, the economic information relating to the at least one crop comprises information relating to markets in the locality of the field.
In an example, the economic information relating to the at least one crop comprises information relating to the crops sold at markets in the locality of the field.
In an example, the pricing information relates to historical pricing information at markets in the locality of the field.
In an example, the economic information relating to the at least one crop comprises historical information relating to the quantities of crops sold at markets in the locality of the field.
According to an example, the input unit is configured to enable the user of the device to input an information request relating to the at least one crop. Determination of the economic agricultural management information can then comprise utilisation of the information request relating to the at least one crop.

According to an example, the economic agricultural management information comprises one or more of: what crop to sow; when to sow the crop; when to harvest the crop; when to sell the crop; where to sell the crop; what price is expected for the crop; whether to harvest and sell in stages and where to then sell the harvested crops; what to do to improve the quality and/or yield of the crop and what effect this has on the expected financial return for the crop; and whether to use a fertilizer, a herbicide and/or an insecticide and what effect this has on the expected financial return for the crop.

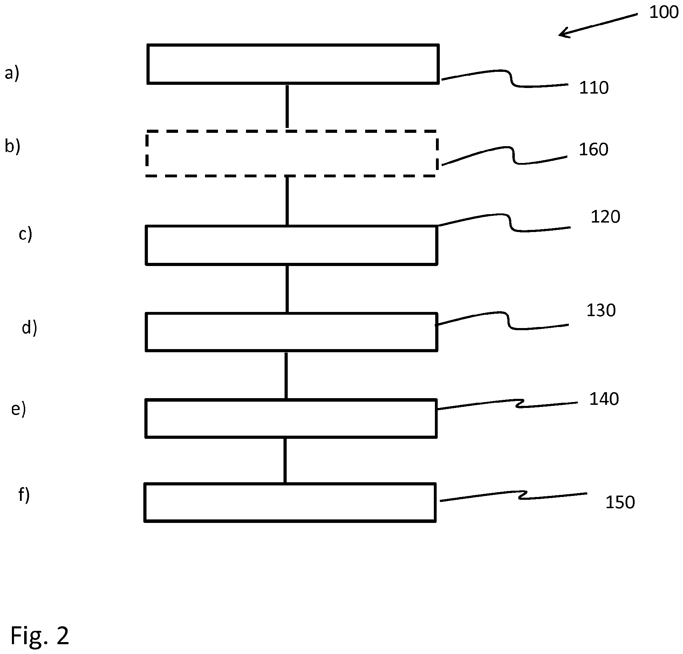

Fig. 2 shows an example of a method 100 for economic agricultural management using a hand held device in its basic steps. The method 100 comprises:
in a providing step 110, also referred to as step a), providing by a user of the device agricultural information relating to a field, wherein the agricultural information comprises information on at least one crop;
in a transmitting step 120, also referred to as step c), transmitting, using a transmitter of the device, information comprising the agricultural information relating to the field;
in a receiving step130, also referred to as step d), receiving, using a receiver of the device, agricultural data that comprises economic information relating to the at least one crop;
in a determining step 140 , also referred to as step e), determining, using a processing unit of the device; economic agricultural management information on the basis of the agricultural data; and
in an outputting step 150, also referred to as step f), outputting, using an output unit of the device, the economic agricultural management information to the user of the device.
According to an example, the device comprises a GPS unit, and wherein step a) comprises determining at least one geographical location of the field, the determination comprising utilisation of the GPS unit. The information transmitted by the transmitter can then comprise the at least one geographical location of the field.

In an example, determination of the at least one geographical location of the field comprises at least one movement of the GPS unit.

In an example, the at least one movement comprises the device being moved around at least one boundary of the field.

In an example, the at least one movement comprises the device being moved around all of the boundaries of the field.
According to an example, the device comprises a camera, wherein step a) comprises the user acquiring at least one image relating to the at least one crop using the camera. In step c) the information transmitted by the transmitter can comprise the at least one image relating to the at least one crop.

In an example, the at least one image relating to the at least one crop comprises an image of the at least one crop.
In an example, the economic information relating to the at least one crop comprises pricing information relating to the at least one crop.

According to an example, the method comprises step b) inputting 160 by the user, via an input unit of the device, an information request relating to the at least one crop. Step e) can then comprise utilisation of the information request relating to the at least one crop.

In an example, the economic agricultural management information comprises one or more of: what crop to sow; when to sow the crop; when to harvest the crop; when to sell the crop; where to sell the crop; what price is expected for the crop; whether to harvest and sell in stages and where to then sell the harvested crops; what to do to improve the quality and/or yield of the crop and what effect this has on the expected financial return for the crop; and whether to use a fertilizer, a herbicide and/or an insecticide and what effect this has on the expected financial return for the crop.

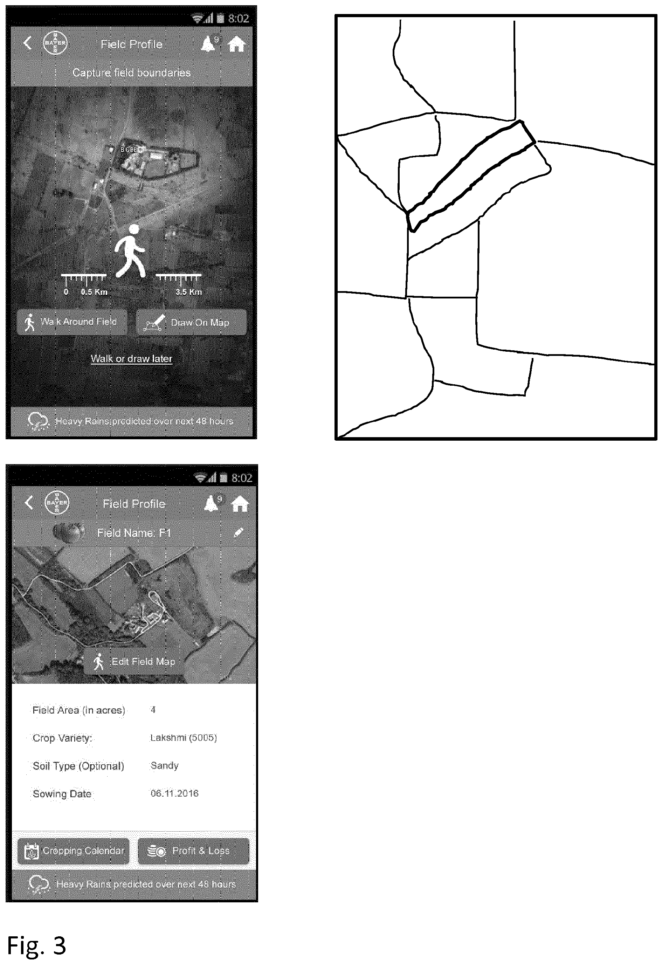

Fig. 3 shows an example of how a user uses the device. The user has an App on their smart phone. When asked to define where their field is to be found, the user is actually not sure. She lives in a rural community, has a very small field, and grows different seasonal crops that she sells at one or more local markets. She grows her crops using the knowledge she has gained from successes and failures, and from knowledge gained from her neighbours. She however believes that she can do better, and is operating a device as described herein, that in this example is the smartphone operating an APP (application). Returning to her problem, as to where her field is to be located, the device requests that she walk around the boundary of her field. The device also asks that on her route around the field boundary she can take images of the boundary, but that this is not necessary. Having done this, she indicates that she has finished.

At this point, the mobile phone accesses a remote server via normal telecommunication transmissions, and information is downloaded to the smart phone. This information indicates what crops would be best to grow in that field, where to sell such crops, what prices could be obtained for such crops, and information enabling the cost/benefit of using fertilizers, herbicides, pesticides to be determined. Knowing the size of the field, the farmer is provided with information regarding how much seed for example is required, with this information being presented for example on the screen of a mobile phone such as a smart phone. The farmer is also provided with information relating to what the expected yield for her crop will be, and whether local markets at the expected time of harvest will be able to accommodate her harvest. The farmer is also provided with information relating to which markets it would be best to use, and what price she might be expected to get. If the farmer has uploaded information relating to the crop, such as information on the soil type, images of the plants growing, and images of the fruits/crop themselves/itself, as well as images that shows information relating to pests and diseases this information can be used to provide the farmer with more accurate expected pricing information, and information relating to how to mitigate such problems and the associated cost and how it could impact the price she could achieve. Thus, the farmer can be provided with information relating to the costs of using fertilizer, herbicide and pesticide and what effect these would have on an anticipated sale price. Also, if there is no need to use fertilizer, herbicide/pesticide the farmer can be provided with this information.

Thus the remote server, from the general location of the user, and the other information as detailed, can provide information regarding the type of crop that could be grown and the seed sowing rate per unit area, as well as economic data relating to selling the product and how best to prepare the product for sale. A processor in the smartphone can then process this downloaded information, to provide the farmer with information regarding the actual amount of seed required for her field, and where to sell the final product and when.

In addition to being advised what crop to grow, the farmer can indicate the specific crop that she is growing, and can provide information via a keyboard (keypad of the mobile phone) and or take images regarding other information such as images of weeds, diseases and pests, and images of the crop/fruit itself and be provided with economic information relating to the crop, for example where and when and for what price to sell the crop. The information indicated by the farmer is again transmitted to the remote server, and the information provided back to the farmer indicates information such as what herbicides or pesticides/insecticides to use and how and when to use them as well as the quantities required, as well as the cost benefits relating to such use in terms of the effect of price that is to expected. The farmer is also provided with information relating to what markets to use, what the expected sale price could be, based on historical information, and the expected quality and yield of her crop when she will harvest - again she can be advised when to harvest, that could be at a non-optimum time with respect to the quality of her crop, but which is at a time when a better price is expected to result. The information also specifies when to water the crop and when to harvest it, in addition to how to prepare the crop for sale and where and when to sell, and what price could be expected.

Rather than use a remote server, if the smartphone has sufficient memory the database of information is held on the remote server and the processing that is done to locate the field, and determine weeds/pests, and determine the economic information etc resides on the smartphone itself. In this case, information need not be sent to the remote server, but the farmer can be provided with the economic agricultural management information even in remote locations with no telephonic coverage.

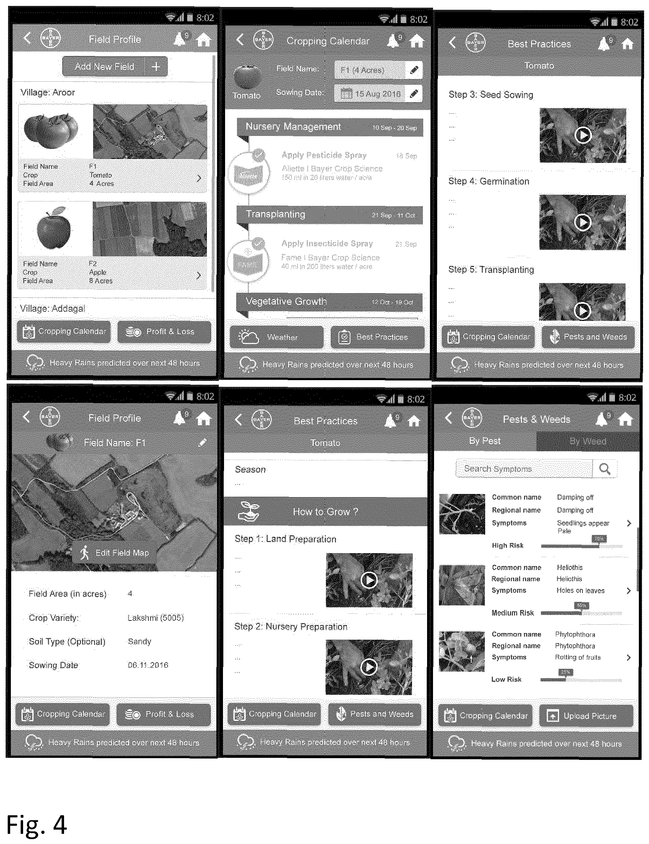

Fig. 4 shows a further example of how the farmer uses the hand held device, and can follow on from the use exemplified in Fig. 3. The order of the pictures shown in Fig. 4 is 1) top left; 2) bottom left; 3) top middle; 4) bottom middle; 5) top right; and 6) bottom right. At 1) the farmer has entered into the device the crops that she grows in different fields. This could actually be crops that she plans to grow, or indeed she can ask for advice on what crops it would be best to grow. For example on the basis of the location and size of her field, the soil quality in her field, the weather forecast over the coming days and possibly weeks, and when she would like to harvest the crop and so earn some money, she can be provided with suggested crops to grow, and information on how to grow and look after that crop, and the costs associated with different actions plans can be provided to her. However, returning to the specific situation shown in 1), the farmer has indicated that in one field she is growing tomatoes and in a second field she is growing apples. In 2) she has indicated the specific variety of tomato grown in field F1 the soil type which is optional information and the sowing date. This information is sent to the remote server, and data is sent to her mobile phone relating to all aspects of the agricultural management of this crop, that takes into account when the crop was sown, where her field is located, the size of her field and information such as the weather forecast, the types of pest and disease that may affect her crop at that location.

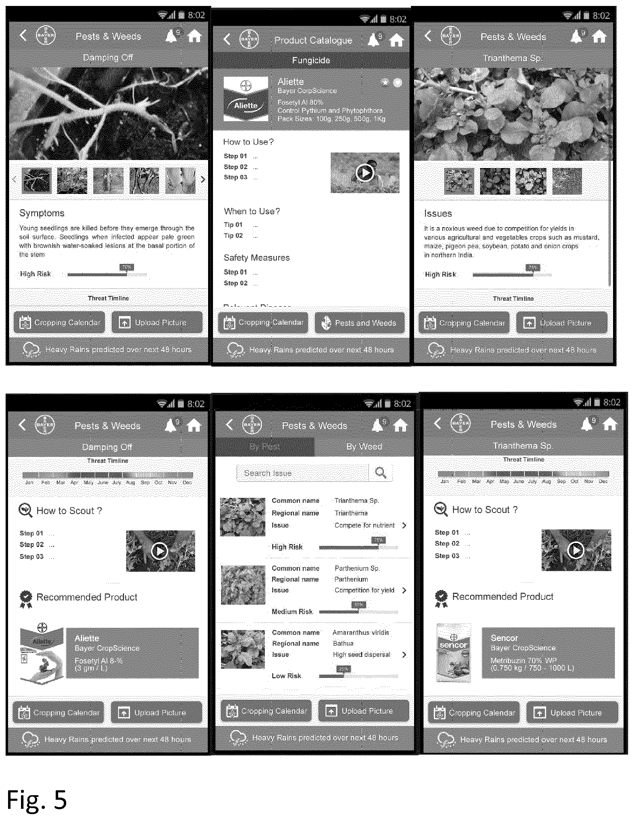

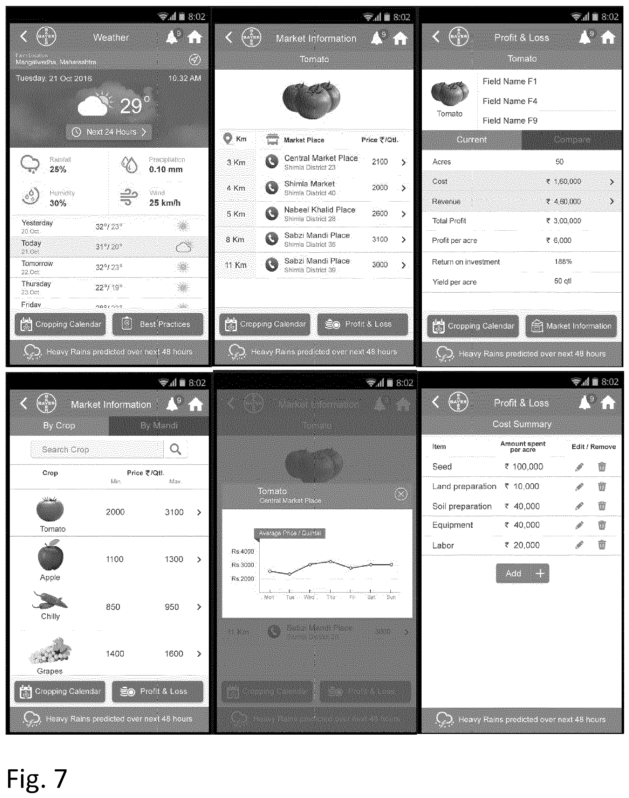

Information downloaded to the phone also relates to the location of local markets, what they sell, and pricing information at those markets for different products as well as the quantities of products that can be sold in particular markets. This information can be considered to form part of agricultural data, and the processor of the smart phone utilizes this dataset to drill down and provide specific tailored information to the farmer. In Fig. 4-3) the farmer has requested information regarding the general management of her crop, and is provided with information relating to nursery management including when and how to apply a pesticide, is provided with information regarding transplanting the crop, with information regarding when and how to apply an insecticide, the farmer is also provided with information relating to predicted heavy rainfall over the next 48 hours, enabling her to plan her actions accordingly. Also, information regarding vegetative growth is provided. The farmer requests more information on vegetative growth, with the information provided to the farmer as shown in 4) and 5). Following this request, in frames 4) and 5) she is provided with information relating to how to prepare the land for the tomatoes, information relating to nursery preparation, seed sowing, germination, and transplanting. She is also provided with information regarding how to look for weeds when the crop is growing, with this discussed in more detail in Fig. 5, and provided with specific economic information which is discussed in more detail with respect to Fig. 7.

With continued reference to Fig. 4, she is concerned that her crop is not growing as expected, and wonders if something is going wrong. She asks about this through appropriate interaction via the keypad of her smart phone, and in 6) is provided with more information on pests and weeds that could be affecting her crop based on where her field is located, and the time of year and when she sowed the crop and therefore the stage of development the crop was expected to be at. The processor in the mobile phone interrogates the information that was initially downloaded relating to the crop (the agricultural data), and the result of this interrogation is a determination of the information that is presented to the farmer in 6). The farmer could have taken a photograph of the ripening tomatoes and of the leaves and overall tomato plants. The processor in the mobile phone then uses image processing, in combination with the data previously downloaded to the phone, to provide better information to the farmer as to what the problem could be. However, the images could be sent to the remote server, and this more tailored information determined remotely and then sent to the farmer's mobile phone, enabling the information as shown in 6) to be presented to the farmer.

Fig. 5 is a continuation of the frames shown in Fig.4. The order of the pictures shown in Fig. 5 is again 1) top left; 2) bottom left; 3) top middle; 4) bottom middle; 5) top right; and 6) bottom right. In 1), following Fig. 4- 6) relating to what the possible problems could be, the farmer in Fig. 5-1) has indicated that she considers the problem to be damping off. Alternatively, rather than the processor presenting the information relating to a number of possibilities as shown in Fig. 4 - 6), the processor and or remote server can have automatically determined that the problem was damping off, and the information as shown in Fig. 5 -1) be immediately presented to the user. The process by which images can be used to determine a problem utilizes a machine learning algorithm, such as a neural network that has been trained using numerous images of tomatoes at different stages of growth, at different parts of the world, and at different times, where these images relate to tomatoes that have no problem and tomatoes that are being affected by different pests and diseases, as well as images of complete plants, and leaves, that similarly are at different stages of growth, at different locations of the world, at different times, and that have been affected by different pests and diseases, as well as images of plants that have not been affected. This training set is a "ground truth" set, in that each image is tagged with all the relevant information discussed above. Then, on the basis of an image of a fruit and/or leaf the algorithm can determine the pest/disease or determine that there is no pest/disease problem, but that the crop needs to be watered. This process can operate without knowledge of the particular crop being used, but can operate better with knowledge of that crop. Also, images of weeds and or images of pests themselves (e.g. insects) can be taken, and similarly analyzed with the, or a similar, neural network to provide the farmer with information relating to the pest/disease. Indeed, from the information provided by the farmer, a machine learning algorithm can be used to determine the possible problems as presented in Fig. 4-6), even without image data being presented. The information being processed then relating to the crop, the location, time of year, stage of growth and other non-image based information as discussed here. This non-image information is also utilized when there are images, and augments the image processing in coming to a prediction of the possible problems as seen in Fig. 4-6) and Fig. 5-1).

Continuing with Fig. 5-1), the farmer is presented with information relating to "damping off", with an explanation of what the symptoms are and a probability of this being the problem and/or a general likelihood of this problem existing. The farmer requests further information regarding damping off, and in Fig. 5-2) is provided with information regarding how to check, by scouting, the crop in the field to confirm that the problem is indeed damping off, or indeed any other problem - be it a disease or pest that has been presented to the farmer as a potential problem. The farmer is also provided with the name of a recommended product that can be used to treat the problem, and in Fig. 5-3) is provided with information relating to how to use the product, when to use the product and what safety measures to take. In Fig. 5 in frames 4), 5) and 6) further examples of potential problems that can be presented to the farmer on the basis of information provided by the farmer relating to the crop in the field, and information relating to the field itself, are shown.

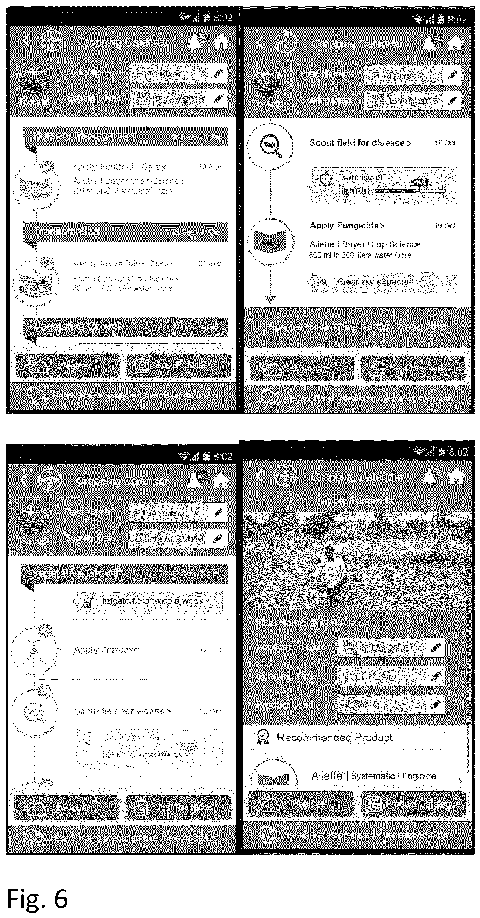

The farmer also requests information relating to how she should manage the tomato crop in her field, with Fig. 6 showing the information presented to the farmer relating to her specific crop, in her specific field. The order of the pictures shown in Fig. 6 is 1) top left; 2) bottom left; 3) top right; and 4) bottom right. In images 1,) 2), and 3) she is presented with information relating to nursery management, and when to apply a pesticide spray, what product she could use, and how it is to be used. She is provided with information regarding when to transplant the crop, and when to apply an insecticide, what insecticide could be used and how to apply it. Further information such as how often to water or irrigate the crop, when to apply fertilizer, when it would be best to search (scout) for weeds and diseases/pests, and when to apply fertilizer is provided to the farmer, with this information being provided to the farmer also taking into account the weather forecast. This means that she will not be advised to do something at a time when the weather conditions would not be suitable for that task to be done, and rather task timelines can be adjusted to earlier or later dates in order to take into account the predicted weather conditions at the location of her field. Fig. 6-4) shows an example of the information presented to the farmer relating to the crop in her specific field, that has been presented to her on the basis of information provided by the farmer and where processing of that information has indicated that it would be best to apply a fungicide on a specific date. The farmer is provided with a product that could be used, a best date to spray the fungicide, the amount and way of apply it, and provided with information relating to the cost per litre of product, thereby enabling the farmer to understand the cost of treatment.

Fig. 7 shows specific economic information provided to the farmer. The order of the pictures shown in Fig. 7 is again 1) top left; 2) bottom left; 3) top middle; 4) bottom middle; 5) top right; and 6) bottom right The farmer wishes to understand where she should sell her crop, where and at what price for the quality of her crop, and whether she should use different markets to sell different crops in order to obtain the best price. She also wishes to understand the costs associated with managing and growing her crop, and how this will impact the possible sale price she can get in order to be provided with an understanding of the revenue she could anticipate. In 1) she is provided with information relating to the weather forecast, enabling her to determine whether something planned for her crop (watering, weeding, applying fertilizer/herbicide/pesticide, harvesting) should be done as planned or brought forward or delayed. In 2) she is provided with the minimum and maximum prices she can expect for different crops, and on what markets prices for specific crops could be achieved. She requests specific information relating to tomatoes, and in 3) she is provided with the price she could obtain at different markets as well as the distance to those markets enabling her to factor in transportation costs. In 4) she is also provided with pricing information for specific markets as a function of time, from which a best time to sell can be determined. Additionally, in 5) and 6) profit and loss information is given, relating to the anticipated return on her investment for a specific field in which a specific crop has been grown, and she is provided with information relating to what the specific costs are. In this way, the farmer is provided with a simple, easy to use, and accessible means to manage and sell her crops, that is particularly suited to smallholders.

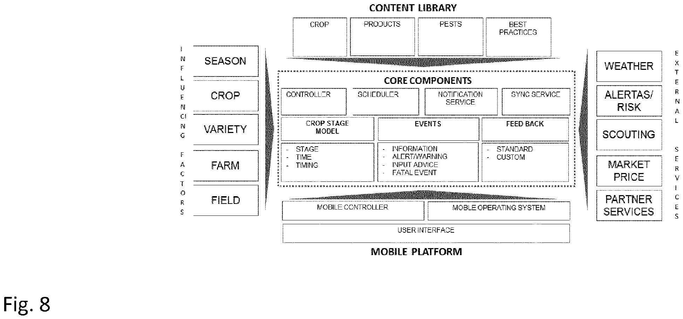

Fig. 8 shows a detailed example of a workflow for the provision of economic agricultural management information to a farmer. A particular example relating to a provision of a cropping calendar is shown.

In Fig. 8, creating a personalized cropping calendar involves the interaction among several core components and interaction with the content library, influencing factors, external services and mobile platform. The provision of personalized content delivery (relevant content at right time) is the purpose of developing a cropping calendar. Content related to the cropping calendar is stored in an organized manner in the content library.

Different factors relating to the provision of the cropping calendar are now discussed:

### CONTENT LIBRARY

### CROP

This relates to agronomic growth stages, time and timing for each crop. The crop dynamics influence the farming practices. E.g.: Farming practices followed in a paddy are different to those required in growing Tomatoes.

### PRODUCTS

Product catalog consists of products details, such as products from Bayer. And provides detail such as: features, benefits, mode of action, recommended crop, target pests, method of application, pre harvest interval etc.

### PESTS

The pests module consist of pest name, symptoms caused by pests, control measures recommended control measures.

### BEST PRACTICES

The farming practices recommended for profitable farming. These practices include standard practices and custom practices. Standard practices: The farming practices generally followed by farmer in a specific crop stage. E.g. basal fertilizer application during sowing stage. Spacing to be followed during later stages. Custom practices: The farming practices followed by the farmer as a special case to improve the farm productivity.

Influencing Factors refer to the external factors that define the set-up of crop stages, time and timing.

### INFLUENCING FACTOR

### SEASON

Agriculture year is divided into several seasons (spring, summer, autumn, and winter) marked by particular weather patterns which influence the growth cycle of crop and incidence of pests.

### CROP

Crop is the plants cultivated for commercial purpose in the field. In case of mixed cropping, more than one kind of crop might be grown in the same field. Primary crop/main crop shall be considered for creating cropping calendar. A field can have only one main crop for which the cropping calendar will be generated.

### VARIETY

Self-pollinated varieties or hybrids of a crop grown by the farmer. Eg: Abhinav, Laxmi in Tomato.

### FARM

Unit of land where the crops are grown. This will be a permanent location, area or the coordinates are not changed often. A farmer can have multiple farms.

### FIELD

Sub unit of Farm, which may change (area) every season as the farmer grows different crops. A farm can have multiple fields.

Core components are integral components of cropping calendar that controls the life cycle of cropping calendar (start to end).

### CORE COMPONENTS

### CONTROLLER

Controller is, for example, a kind of rule engine developed specifically for the purpose of the cropping calendar. Controller analyzes the data received from external services and interacts with other core components.

### SCHEDULER

Spring scheduler initiates the process to gather information from external services, run the rule engine and identify the events that should be sent to the mobile application.

### NOTIFICATION SERVICE

Notifications service allows server to send different types of alerts and notifications to the mobile app. To generate notifications, Cropping Calendar service interacts with external services.

### SYNC SERVICE

Sync Service enables users to synchronize the data from the server. It will be invoked in periodic fashion (at a scheduled time) or on a state change (dynamic/real time). Last successful sync timestamp will be used for syncing subsequent state changes between server and app.

If the response is too big to handle in a single response then it will be split into multiple logical parts and will be transferred. Client receives all the splits and updates it in local data repository. If the data is not completely received due to any reason then it will be completely rolled back at client side and a fresh request for update will be initiated during next execution of Sync invocation.

### CROP STAGE MODEL

The timelines of a crop calendar is generated based on the Crop stage, timing and time. Standard crop stages defined by agronomists will be mapped with the local crop stages that will be shown in mobile app. Timelines of crop calendar start from specific date (e.g. sowing date-1st sept 2017) and end after harvesting. The interval between crop stages is timing (e.g. Germination takes 10 days after sowing) and the dates derived based on timing will be shown as time (Germination commence on 10th Sept 2017).

### EVENTS

An event is a triggered cropping calendar information which will be displayed along crop stages. Events are classified into 4 categories based on the severity.
1. Information - No remedial action is required. for example, notify famer on a new growth stage attained by the crop.
2. Alert/Warning - Investigate to decide if an action is required. For example, Alert sent when the weather conditions congenial for pests and diseases
3. Input advice - Action is required by the farmer. For example, Spray Nativo to control late blight of Tomato.
4. Fatal event - A disaster is likely to occur. For example, cyclone/hurricane is predicted to destroy the crop

### FEEDBACK

Feedback is a component that allows farmers to provide information related to the events/farming practices. Standard feedback is the data capture in a predefined template. Custom feedback is a general data capture template designed to allow farmers provide specific feedback which is not covered in standard templates. Example of data types required for specific farming related data capture is given below.
- Date: Date of sowing, date of application, date of harvest, etc..
- Text /comments: A text entry field required in all the feedback templates to capture verbal and qualitative inputs from farmer
- Number entry: A field to capture the data like cost of plant protection application, dosage applied by farmer etc.
- Picture: Attach a picture along with the feedback entered. E.g. capture the picture of a product used for plant protection, capture the picture of pests and diseases in farm.
- Radio button: Allow farmer to select Yes/No answers. E.g. was the recommendation useful - Yes/No.
- Drop down or Combo-box : Allow farmers to select from the pick list instead of data entry. Eg. List of Bayer products in a drop down menu.
- Check box: For example, allow farmers to select the check box if a recommended practice is followed.

Mobile platform plays a vital role in enabling most of the features built in the mobile application. Mobile device with better OS capabilities provide optimal user experience.

### MOBILE PLATFORM

### MOBILE CONTROLLER

Mobile controller rule engine is similar to the controller in server which is designed specifically to analyze the data gathered from external services and interact with other core components.

### MOBILE OPERATING SYSTEM

Operating system (OS) interact with the mobile controller and allows the application to utilize the hardware and software resources. E.g. the capabilities for local language, keyboard, screen size, camera resolution, performance, processing speed, offline usage etc.

Digital farming services and other third party services provide information related to external factors that trigger core components to generate events in cropping calendar.

### EXTERNAL SERVICES

### WEATHER

Weather API from digital farming services provide weather daily and hourly weather forecast on regular intervals. The information is useful for farmers to plan and manage farm activities.

### ALERTAS/RISK SERVICE

The Alertas provide weather and location based alerts and information related to pests and disease incidence, which in turn filtered by controller and relevant crop stage specific alerts are provided in cropping calendar.

### SCOUTING

Service provided by digital farming platform enables farmers to send pictures of weeds, pests and diseases and identify pests and obtain control measures.

### MARKET PRICE

Market price information from third party services will be funneled through controller for personalized alerts to farmer's interest.

### PARTNER SERVICE

Services from other partners/stakeholders, for example of Bayer, to provide information like recommendation on application of fertilizer for better results based on soil nutrient conditions.

In another exemplary embodiment, a computer program or computer program element is provided that is characterized by being configured to execute the method steps of the method according to one of the preceding embodiments, on an appropriate system. The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.
This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above. According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A hand held device (10) for economic agricultural management, comprising:
- an input unit (20);
- a processing unit (30);
- a transmitter (40);
- a receiver (50); and
- an output unit (60);
wherein, the input unit is configured to enable a user of the device to provide agricultural information relating to a field, wherein the agricultural information comprises information on at least one crop;
wherein, the processing unit is configured to utilize the transmitter to transmit information comprising the agricultural information relating to the field;
wherein, the processing unit is configured to utilize the receiver to receive agricultural data that comprises economic information relating to the at least one crop;
wherein, the processing unit is configured to determine economic agricultural management information on the basis of the agricultural data; and
wherein, the output unit is configured to output the economic agricultural management information to the user of the device.

2. Device according to claim 1, wherein the device comprises a GPS unit (70), and wherein the processing unit is configured to determine at least one geographical location of the field, the determination comprising utilisation of the GPS unit, and wherein the information transmitted by the transmitter comprises the at least one geographical location of the field.

3. Device according to claim 2, wherein determination of the at least one geographical location of the field comprises at least one movement of the GPS unit.

4. Device according to claim 3, wherein the at least one movement comprises the device being moved around at least one boundary of the field.

5. Device according to claim 4, wherein the at least one movement comprises the device being moved around all of the boundaries of the field.

6. Device according to any of claims 1-5, wherein the device comprises a camera (80), wherein the camera is configured to enable the user to acquire at least one image relating to the at least one crop, and wherein the information transmitted by the transmitter comprises the at least one image relating to the at least one crop.

7. Device according to claim 6, wherein the at least one image relating to the at least one crop comprises an image of the at least one crop.

8. Device according to any of claims 1-7, wherein the economic information relating to the at least one crop comprises pricing information relating to the at least one crop.

9. Device according to any of claims 1-7, wherein the input unit is configured to enable the user of the device to input an information request relating to the at least one crop, and wherein determination of the economic agricultural management information comprises utilisation of the information request relating to the at least one crop.

10. Device according to any of claims 1-9, wherein the economic agricultural management information comprises one or more of: what crop to sow; when to sow the crop; when to harvest the crop; when to sell the crop; where to sell the crop; what price is expected for the crop; whether to harvest and sell in stages and where to then sell the harvested crops; what to do to improve the quality and/or yield of the crop and what effect this has on the expected financial return for the crop; and whether to use a fertilizer, a herbicide and/or an insecticide and what effect this has on the expected financial return for the crop.

11. A method (100) for economic agricultural management using a hand held device, comprising:
a) providing (110) by a user of the device agricultural information relating to a field, wherein the agricultural information comprises information on at least one crop;
c) transmitting (120), using a transmitter of the device, information comprising the agricultural information relating to the field;
d) receiving (130), using a receiver of the device, agricultural data that comprises economic information relating to the at least one crop;
e) determining (140), using a processing unit of the device; economic agricultural management information on the basis of the agricultural data; and
f) outputting (150), using an output unit of the device, the economic agricultural management information to the user of the device.

12. Method according to claim 11, wherein the device comprises a GPS unit, and wherein step a) comprises determining at least one geographical location of the field, the determination comprising utilisation of the GPS unit, and wherein the information transmitted by the transmitter comprises the at least one geographical location of the field.

13. Method according to any of claims 11-12, wherein the device comprises a camera, wherein step a) comprises the user acquiring at least one image relating to the at least one crop using the camera, and wherein in step c) the information transmitted by the transmitter comprises the at least one image relating to the at least one crop.

14. Method according to any of claims 11-13, wherein method comprises step b) inputting (160) by the user, via an input unit of the device, an information request relating to the at least one crop, and wherein step e) comprises utilisation of the information request relating to the at least one crop.

15. A computer program element for controlling a device according to any of claims 1 to 10, which when executed by a processor is configured to carry out the method of any of claims 11-14.
